# EUROPEAN PATENT SPECIFICATION

(11) **EP 3 543 574 B1**
(45) Date of publication and mention of the grant of the patent: **22.12.2021**
(21) Application number: 19160539.3
(22) Date of filing: 04.03.2019
(51) Int. Cl.: F16L 3/10, F16L 55/035

(54) **PIPE CLAMP**
ROHRSCHELLE
COLLIER DE SERRAGE

(30) Priority: 02.03.2018 US 201962637577 P
(43) Date of publication of application: 25.09.2019
(73) Proprietor: Erico International Corporation, Solon, OH 44139 (US)
(72) Inventor: OH, Michael Hung-Sun, Twinsburg, OH 44087 (US)
(74) Representative: Barker Brettell LLP

(56) References cited:
- EP-A1- 2 113 699
- DE-A1-102015 109 252
- DE-A1-102015 109 253
- DE-C- 530 599
- DE-C1- 4 431 692

## Description

### BACKGROUND

In many applications, it may be useful to secure pipes relative to support structures. For example, conventional pipe clamps can be configured to be secured to hanging threaded rods or other components to secure associated pipes to beams or other structures.

In one related reference, DE 10 2015 109253, a pipe clamp with two radially outwardly projecting clamping flanges which are clamped together with them by cross-clamping screw is described. A first of the two clamping flanges has a laterally open slot for receiving the clamping screw and the second clamping flange has a threaded hole into which the clamping screw is rotated. At the open end of the slot a stiffening bracket connects the first clamping flange on either side of the slot.

In another related reference, DE 10 2015 109252, a pipe clamp with an insulating insert attached to a clamp bracket of the pipe clip is described. The clamp bracket surrounds a receiving space for a tube extending along a longitudinal axis. An insulating body of the insulating insert encloses a first cavity which, on its side facing the clamp bracket, has a first apex, and, on its side facing the receiving space, is delimited by a second wall portion. The apex forms part of the first wall portion, which is at the smallest distance from the longitudinal axis of the receiving space. This configuration of the first cavity ensures that the insulating insert does not detach from the clamp bracket under load.

In yet another related reference, EP 2 113 699, an insulating pipe clamp is described having a conventional design with two clamp halves clipped together via first flanges radial flanges and with the other radial flanges pulled together by a threaded fastener with a short threaded section linked to the longer outer threaded section via a short section with reduced diameter, while elastic insulating inserts prevent thermal losses and/or acoustic vibrations. A user can secure the clamp via the threaded fastener to a point where the threaded flange is positioned over the reduced diameter. This prevents undue compression of the insulating inserts. The clamp can be temporarily tightened further by securing onto the short threaded section, e.g. for securing ladders, hoists etc. The clamp is also fitted with a captive nut for securing onto supports.

In still another related reference, DE 44 31 692, a pipe clamp with a band-shaped clamp body 12, which is used to encompass a rod-shaped body 10, in particular a pipe, is described. The pipe clamp has end parts, wherein at least one end part has an incision 27 open to the outside for the engagement of a holding part and, at the other associated end part, has a bracket-like connecting body pivotable relative to this end part. The middle part of the bracket-like connecting body has a deflection point. Characterized in that the connecting body is arranged at an outwardly bent end of the end part and that a resilient return element is provided between this bent end and the deflection point. The pipe clamp is created with a locking means that allow one-handed operation.

In another related reference, DE 530 599, an adjustable pipe clamp is disclosed and has screws received within frustoconical holes in the flange to secure the pieces of the pipe clamp together.

### SUMMARY

The present invention is defined by a clamp according to claim 1.

A clamp is provided for securing a pipe using first and second fasteners. Each of a first clamping member and a second clamping member can include a respective clamping portion configured to engage the pipe and a respective set of ears. The ears of each of the clamping members can extend from opposite sides of the respective clamping portion, with a first ear being configured to receive the first fastener and a second ear being configured to receive the second fastener, to secure the first and second clamping members together. Each of the first and the second ears of the first clamping member can include a recessed seat to receive a head of the first or the second fastener, respectively.

Some embodiments provide a clamp for securing a pipe using first and second fasteners, with the clamp configured to secure the pipe with the pipe extending along a pipe axis. Each of a first clamping member and a second clamping member can include a respective clamping portion configured to engage the pipe and a respective set of at least two ears. The respective sets of the at least two ears can extend from the respective clamping portions and can be configured collectively to receive the first and second fasteners to secure the first and second clamping members together. A first ear of the first clamping member can include a mounting portion and an installation tab, with the installation tab extending at an angle from the mounting portion. The first ear of the first clamping member can further include a closed elongate slot that extends along the mounting portion and the installation tab. With the first fastener secured to a first ear of the second clamping member and extending through the closed elongate slot, the first clamping member can be configured to pivot away from the pipe axis to open the clamp for installation of the pipe, with the installation tab engaging a head of the first fastener to secure the first clamping member to the second clamping member at an open angle of between approximately 60 and approximately 90 degrees, inclusive, when the clamp is opened for installation of the pipe.

### BRIEF DESCRIPTION OF THE DRAWINGS

The accompanying drawings, which are incorporated in and form a part of this specification, illustrate embodiments and, together with the description, serve to explain the principles of embodiments:
FIG. 1 is a front elevation view of a pipe clamp according to one embodiment not comprised by the invention, with the pipe clamp in a closed configuration;
FIG. 2 is a front elevation view of a top clamping member of the pipe clamp of FIG. 1;
FIG. 3 is a top isometric view of the top clamping member of FIG. 2;
FIGS. 4A and 4B are a bottom isometric partial views of first and second ears, respectively, of a bottom clamping member of the pipe clamp of FIG. 1;
FIG. 5 is a front elevation view of the pipe clamp of FIG. 1 in an open configuration, with a non-metallic liner installed;
FIG. 6 is a front elevation view of a pipe clamp according to an embodiment of the invention, with the pipe clamp in a closed configuration;
FIG. 7 is a front elevation view of a bottom clamping member of the pipe clamp of FIG. 6;
FIG. 8 is a bottom isometric view of the bottom clamping member of FIG. 7;
FIG. 9 is a bottom isometric view of an ear of the bottom clamping member of FIG. 7;
FIG. 10 is a bottom isometric view of another ear of the bottom clamping member of FIG. 7;
FIGS. 11 and 12 are front elevation views of the ears of FIGS. 9 and 10, respectively;
FIGS. 13 and 14 are bottom isometric views of the ears of FIGS. 9 and 10, respectively, with the clamp of FIG. 6 in the closed configuration of FIG. 1;
FIG. 15 is a front elevation view of the pipe clamp of FIG. 6 in an open configuration;
FIG. 16 is an isometric view of the pipe clamp of FIG. 6 with a non-metallic liner installed, with the pipe clamp in the closed configuration of FIG. 1;
FIG. 17 is a cross sectional view of the bottom clamping member of the pipe clamp of FIG. 6 and the non-metallic liner of FIG. 16; and
FIG. 18 is a front elevation view of a pipe clamp according to still another embodiment not comprised by the invention, with a non-metallic liner installed.

### DETAILED DESCRIPTION

It is to be understood that the phraseology and terminology used herein is for the purpose of description.

The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. The following detailed description is to be read with reference to the figures, in which like elements in different figures have like reference numerals. The figures, which are not necessarily to scale, depict selected embodiments and are not intended to limit the scope of embodiments of the invention.

Some of the discussion below describes pipe clamps for use with threaded rods to support pipes of circular cross-section. It will be understood that the context and particulars of this discussion are presented as examples only. For example, embodiments of the disclosed pipe clamps can be used to secure non-circular pipes or other non-pipe objects, and can be used to secure pipes relative to structures without necessarily using threaded rods.

As used herein, directional terms including "top," "bottom," "side," "horizontal," "vertical," and so on are used to indicate directional relationships with respect to an arbitrary reference frame (e.g., a reference frame of a particular figure or figures). These directional terms are used consistently relative to a particular embodiment. For example, a "top" feature of an embodiment is opposite a corresponding "bottom" feature, and a "horizontal" feature generally extends perpendicularly to a "vertical" feature. However, unless otherwise defined or limited, these directional terms are not intended to indicate an absolute reference frame for a particular pipe clamp or installation. For example, in some installations or embodiments, a "horizontal" feature of a pipe clamp, while generally perpendicular to a "vertical" feature of the pipe clamp, may not necessarily extend in a strictly horizontal direction relative to ground. Similarly, in some installations or embodiments, a "horizontal" feature of a pipe clamp, while generally perpendicular to a "vertical" feature of the pipe clamp, may not necessarily extend in a strictly horizontal direction relative to ground. Similarly, in some installations or embodiments, a "bottom" feature of a pipe clamp may not necessarily be disposed below a "top" feature of the pipe clamp relative to the direction of gravity.

As noted above, it may be useful to configure pipe clamps to secure pipes (or other round objects) relative to other structures. In some cases, it may be useful to provide a pipe clamp that can be disposed in an open configuration in order to install a pipe, including while the pipe clamp is secured to a structure and is thus restricted in lateral or axial movement. For example, it may be useful to provide a pipe clamp that can be hung from a threaded rod, then opened, without full disassembly of the pipe clamp (i.e., while leaving all of the components of the pipe clamp secured together), in order to install within the pipe clamp a pipe that is already partially suspended by other devices. In general, it may also be useful to provide pipe clamps that exhibit substantial loading capabilities, such as may be indicated by standardized load rating testing (e.g., as determined based on testing under standards promulgated by RAL Deutsches Institut für Gütesicherung und Kennzeichnung E.V. ("RAL Standards")), and that also provide appropriate acoustic dampening. Some embodiments of the invention can provide one or more of these benefits, as well as other benefits not expressly noted above.

Some embodiments of the invention can include pipe clamps that can be easily opened to relatively large angles without full disassembly of the pipe clamps. This may be useful, for example, to install pipe into a pipe clamp without disassembling the pipe clamp into multiple loose pieces. In some embodiments, in this regard, an ear on a bottom clamping member of a pipe clamp can include a mounting surface on which a fastener (e.g., a screw) is to be seated and an installation tab that extends at an angle from the mounting surface. Further, an elongate slot can extend along at least part of the mounting surface and at least part of the installation tab (e.g., from the mounting surface onto the installation tab). Accordingly, when an opposite ear of the pipe clamp is released relative to a counterpart (top) clamping member, the elongate slot can provide substantial freedom of movement for the fastener, and for the bottom clamping member relative to the fastener. Accordingly, the engagement of the elongate slot with the fastener can allow the bottom clamping member to pivot away from a top clamping member without the fastener being removed from either the top or the bottom clamping member.

Moreover, in some embodiments, with the pipe clamp in a fully opened configuration, the installation tab can engage a head (or other feature) of the fastener to suspend the bottom clamping member from the top clamping member with the bottom clamping member open, relative to the top clamping member at a relatively large angle. For example, in some embodiments, an installation tab can allow a bottom clamping member to hang open at an angle of between approximately 60 degrees and approximately 90 degrees, or between approximately 80 degrees and approximately 90 degrees, relative to a horizontal (or other) reference. This may be useful, for example, in order to allow relatively large pipes to be installed into the clamp member, while the bottom and top clamping members are still secured together.

Some embodiments of the invention can include pipe clamps that exhibit increased load ratings and other beneficial structural aspects, as compared to conventional pipe clamps. An on a bottom clamping member of a pipe clamp includes a mounting portion with a substantially planar surface and with a recessed seat that deviates from (e.g., extends into) the substantially planar surface. In some embodiments, the recessed seat can be a round seat extruded into the mounting portion, such as may usefully receive a circular head of a screw or other similar feature of a fastener. The recessed seat includes a seating surface on which the screw head (or other fastener feature) seats, with the seating surface extending at an angle relative to the substantially planar surface of the mounting feature. In some embodiments, the angle can be approximately 8 degrees, or another non-zero angle less than approximately 10 degrees.

Some embodiments can combine some or all of the features noted above. For example, some embodiments can include a pipe clamp with a recessed seat on more ears of a clamping member, as well as one or more elongate slots extending into the one or more recessed seats, or sub-combination of these features. Similarly, some embodiments can include a pipe clamp with installation tab extending at an angle from a mounting portion of the ear, and an elongate slot extending into the recessed seat and onto the installation tab, or a sub-combination of these features.

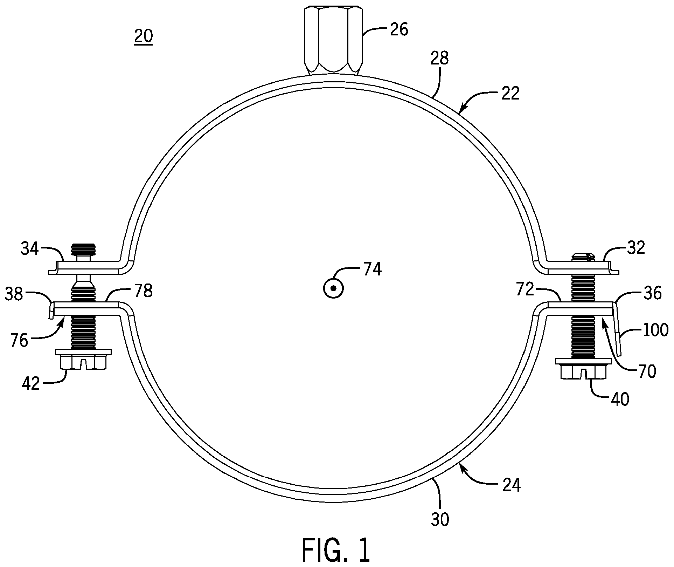

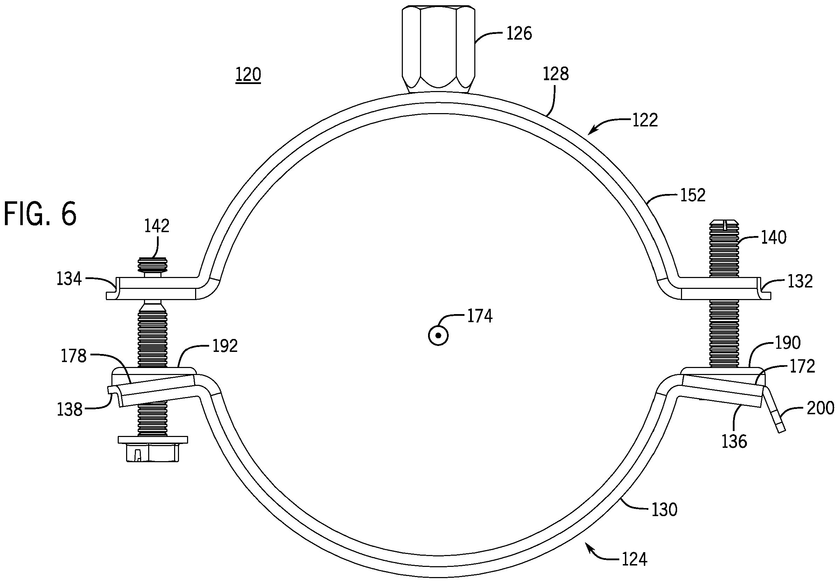

FIG. 1 illustrates an example pipe clamp 20. The pipe clamp 20 includes a first clamping member 24, a second clamping member 22, and a securement 26 configured to secure the second clamping member 22 to a threaded rod (see FIG. 6) or other structural feature.

The first and second clamping members 24, 22 include respective clamping portions 30, 28 that are configured as arcuate features that can surround, engage, and support a pipe (not shown). In some non-claimed embodiments, each of the clamping portions 28, 30 can exhibit a substantially semi-circular internal profile. In other non-claimed embodiments, other geometries are possible. For example, one or both of the clamping portions 28, 30 may exhibit a substantially circular profile, but may extend over an arc of less than 180°. In this regard, for example, the clamping members 22, 24 may be spaced apart from each other even when a pipe is securely clamped between them.

The first and second clamping members 24, 22 also include respective sets of ears 36, 38 and 32, 34 that are configured to collectively engage a set of fasteners 40, 42 in order to secure the clamping portions 28, 30 together. In particular, in the non-claimed embodiment illustrated, the ears 32, 36 are configured to be secured together using the fastener 40, which is configured, for example, as a hex-headed screw. Likewise, the ears 34, 38 are configured to be secured together using the fastener 42, which is configured, for example, as a hex-headed toggle screw. In other non-claimed embodiments, other configurations for the ears 32, 34, 36, 38 or for the fasteners 40, 42 are possible.

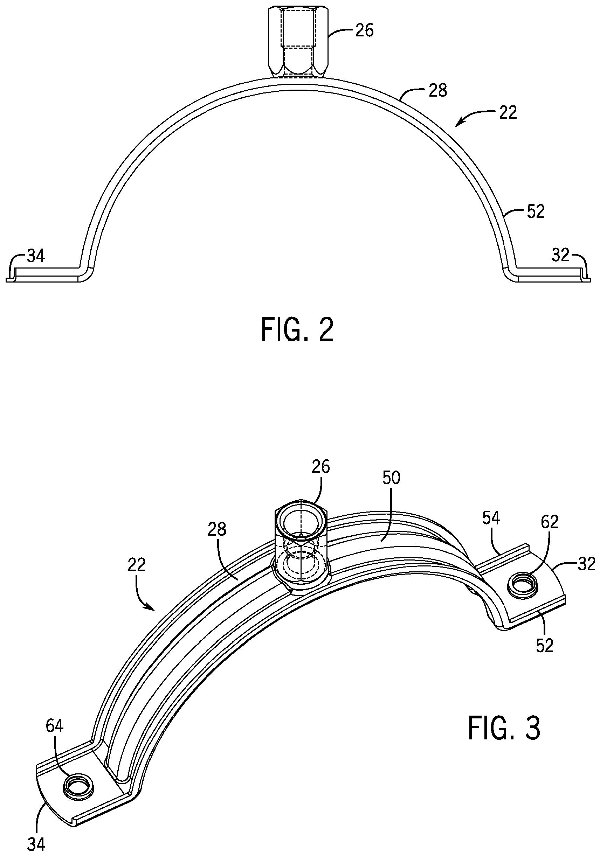

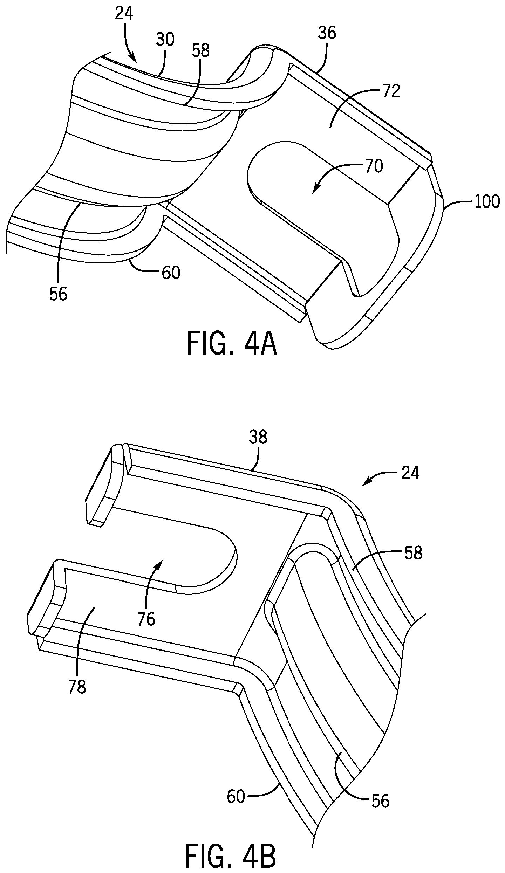

In some non-claimed embodiments, strengthening features, such as one or more ribs and one or more peripheral flanges can be included. As illustrated in FIG. 3, for example, the second clamping member 22 includes a central rib 50 and a set of peripheral flanges 52, 54. The central rib 50 extends along the entire profile of the clamping portion 28 and corresponds to a central groove (not shown in FIG. 3) that is opposite the clamping portion 28, inside of the pipe clamp 20 (i.e., on the inner or pipe side of the first clamping member 22). In the non-claimed embodiment illustrated, the central rib 50 does not extend onto the ears 32, 34, 36, 38, although other configurations are possible. In contrast, the peripheral flanges 52, 54, in the non-claimed embodiment illustrated, extend along the entire profile of the clamping portion 28 and over substantially the full radially-extending length of the ears 32, 34. A similar central rib 56 and similar peripheral flanges 58, 60 are also included on the first clamping member 24, as partially illustrated in FIGS. 4A and 4B.

Generally, the central ribs 50, 56 and the peripheral flanges 52, 54, 58, 60 can provide increased strength to the clamping members 22, 24. The peripheral flanges 52, 54, 58, 60 in particular can provide significant strength to the ears 32, 34, 36, 38, as well as to the clamping portions 28, 30, so that the deflection of the ears 32, 34, 36, 38 may be relatively minimal when the pipe clamp 20 is appropriately secured around a pipe and appropriately loaded. This can be useful, for example, not only to generally increase the strength of the pipe clamp 20 but also to minimize bending stresses on the fasteners 40, 42. For example, when the clamping members 22, 24 are firmly secured around a pipe (not shown), the relative lack of deflection of the ears 32, 34, 36, 38 can help to ensure that the fasteners 40, 42 are substantially subjected only to tension loading. As a result, smaller sizes of the fasteners 40, 42 can be used than may be possible with conventional arrangements, with corresponding benefits with regard to cost, reliability, and weight.

In different non-claimed embodiments, the ribs 50, 56 and the flanges 52, 54, 58, 60 can exhibit different absolute and relative dimensions. In some non-claimed embodiments, for example, the depth of the flanges 52, 54, 58, 60 (i.e., as measured vertically from the perspective of FIG. 1) can be one and one-half to two times (or more) than the thickness of the material (e.g., metal) used to form the clamping members 22, 24. In some non-claimed embodiments, for example, the depth of the ribs 50, 56 can be the same, or less than, the depth of the flanges 52, 54, 58, 60. In some non-claimed embodiments, for example, the width of the ribs 50, 56 (i.e., as measured into the page from the perspective of FIG. 1) can be more than half of the width of the clamping members 22, 24. In some non-claimed embodiments, for example, the width of the ribs 50, 56 can be more than seven times the thickness of the material used to form the clamping members 22, 24. In some non-claimed embodiments, these relative dimensions can also be usefully employed on other clamps.

As also illustrated in FIG. 3, each of the ears 32, 34 includes an extruded, threaded boss 62, 64, each defining a mounting opening for a respective one of the fasteners 40, 42. As partially illustrated in FIG. 1, a thinner toggle portion of the shaft of the fastener 42 can be aligned with the boss 64 to allow the fastener 42 to be pivoted relative to the ear 34.

In some non-claimed embodiments, the ears 36, 38 of the first clamping member 24 can include elongate slots that can allow a degree of lateral and pivotal relative movement between the clamping member 24 and the fasteners 40, 42. As shown in FIG. 4A, for example, a closed slot 70 can be provided on a substantially planar mounting portion 72 of the ear 36, with the slot 70 extending generally perpendicularly relative to a pipe axis 74 defined by the pipe clamp 20 (see, e.g., FIG. 1) and, along the main portion of the ear 36, radially outwardly from the clamping portion 30. The closed slot 70 can be configured to receive the fastener 40 (see, e.g., FIG. 1), and to thereby continue to secure the clamping portion 30 to the clamping portion 28 even when the pipe clamp 20 is in an open configuration.

In some non-claimed embodiments, as shown in FIG. 4B, an open slot 76 can be provided on a substantially planar mounting portion 78 of the ear 38, with the slot 76 also extending generally perpendicularly to the pipe axis 74 (see FIG. 1). This may be useful, for example, in order to allow the fastener 42 to be pivoted into or out of the slot 76 and, thereby, into or out of engagement with the clamping member 24, without removing the fastener 42 from the clamping member 22 (see FIG. 1). Bent tabs at the radially outer end of the ear 38 can then help to secure the fastener 42 against slipping out of the slot 76, once the fastener 42 has been appropriately tightened, thereby providing a secure closure of the pipe clamp 20 generally.

In some non-claimed embodiments, additional features can be provided in order to further assist with installation of a pipe into the pipe clamp 20. As also illustrated in FIG. 4A, for example, an installation tab 100 extends from the mounting portion 72 of the ear 36 at a non-zero angle relative to the mounting portion 72. In the illustrated non-claimed embodiment, the installation tab 100 extends at an angle of between approximately 90 degrees and approximately 95 degrees, although other configurations are possible.

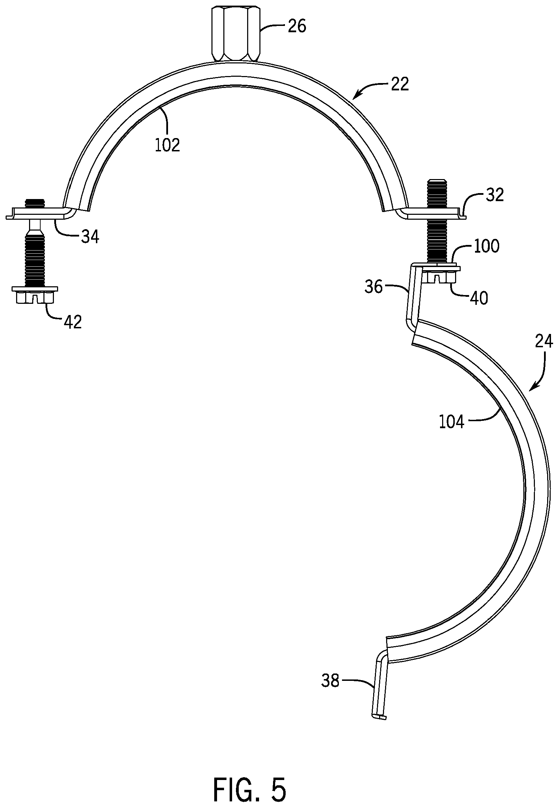

In addition to the noted features, the closed slot 70 also extends from the mounting portion 72 of the ear 36 onto the installation tab 100. Accordingly, when the pipe clamp 20 is fully opened (see FIG. 5), the clamping member 24 can be disposed so that the shaft of the fastener 40 extends through the portion of the slot 70 that is on the installation tab 100. Thus, for example, the installation tab 100 can support the clamping member 24 at an open angle of approximately 90 degrees (e.g., as measured in comparison between a first reference plane extending along the ears 32, 34 and a second reference plane extending along the ears 36, 38). This relatively large open angle can be useful, for example, so that relatively large pipes, such as for ventilation, can be relatively easily installed without requiring full disassembly of the pipe clamp 20 (i.e., while allowing the clamping members 22, 24 and the fasteners 40, 42 to remain connected as a single assembly). In some cases, this arrangement can usefully allow the pipe clamp 20 to be readily installed onto pipes that have already been suspended in a desired location, or otherwise usefully deployed.

In some non-claimed embodiments, liners can be employed in order to improve characteristics of pipe clamp performance. In the configuration illustrated in FIG. 5, for example, two liner parts 102, 104 of a generally non-metallic liner have been installed on the clamping portions 28, 30 of the clamping members 22, 24, respectively. The liner parts 102, 104 can be formed primarily from rubber, other elastomers, or other polymers, and can help to secure pipes in the pipe clamp 20 or to provide acoustic dampening. In some non-claimed embodiments, the liner parts 102, 104 can also increase the load rating of the pipe clamp 20 as compared to arrangements in which conventional liners are used, including as described in detail below. Of course, in some arrangements, such as shown in FIG. 1, the pipe clamp 20 and other clamps disclosed herein can be used without liners.

FIG. 6 illustrates an example pipe clamp 120 according to an embodiment of the invention. In general, many aspects of the pipe clamp 120 are similar to those of the pipe clamp 20, as discussed above. For example, the pipe clamp 120 includes a first clamping member 124, a second clamping member 122, and a securement 126 configured to secure the second clamping member 122 to a threaded rod (not shown) or other structural feature.

Likewise, the first and second clamping members 124, 122 include respective clamping portions 130, 128 that are configured as arcuate features that can surround, engage, and support a pipe (not shown). In the embodiment illustrated, the clamping portions 128, 130 each exhibit a substantially circular internal profile, extending over an appropriate arc length. In other embodiments, however, other geometries are possible.

The first and second clamping members 124, 122 also include sets of ears 132, 134, 136, 138 that are configured to collectively engage a set of fasteners 140, 142 to secure the clamping portions 128, 130 together. In particular, in the embodiment illustrated, the ears 132, 136 are configured to be secured together using the fastener 140, which is configured, for example, as a hex-headed screw. Likewise, the ears 134, 138 are configured to be secured together using the fastener 142, which is configured, for example, as a hex-headed toggle screw. In other embodiments, other configurations for the ears 132, 134, 136, 138 and the fasteners 140, 142 are possible.

In some embodiments, including as illustrated in FIG. 6, the clamping portions 128, 130 may be configured to provide substantially continuous contact with the pipe along the first and second clamping portions. In this regard, for example, as also noted above, the clamping portions 128, 130 may trace substantially circular arcs (e.g., at rest, or when tightened onto a pipe), but may extend over respective arcs of less than 180°. Accordingly, when the clamping portions 128, 130 are appropriately engaged to support a pipe, the opposing sets of ears 132, 136 and 134, 138 may be aligned with each other to receive the respective fasteners 140, 142, but may be spaced apart from each other (e.g., spaced tangentially, relative to the pipe) so as not to be in direct contact with each other. This may be useful, for example, in order to ensure appropriately secure engagement of the pipe by the clamping portions 128, 130 and by the pipe clamp 120 in general. For example, because the ears 132, 136 and 134, 138 are configured not to contact each other when a pipe is appropriately secured, the risk of under-tightening of the pipe clamp 120 due to contact between the ears 132, 136 and 134, 138 can be avoided. Of course, in some cases, similar principles (e.g., geometry of clamping portions and spacing of ears) can be employed in other embodiments disclosed herein.

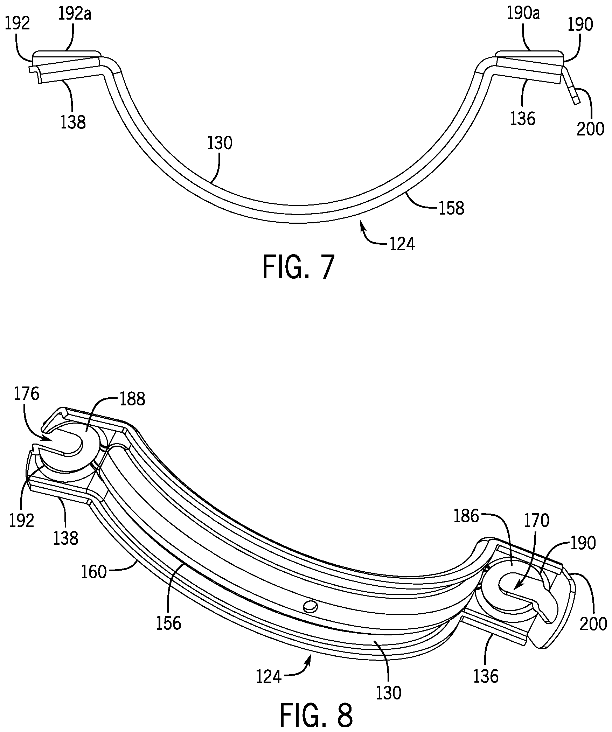

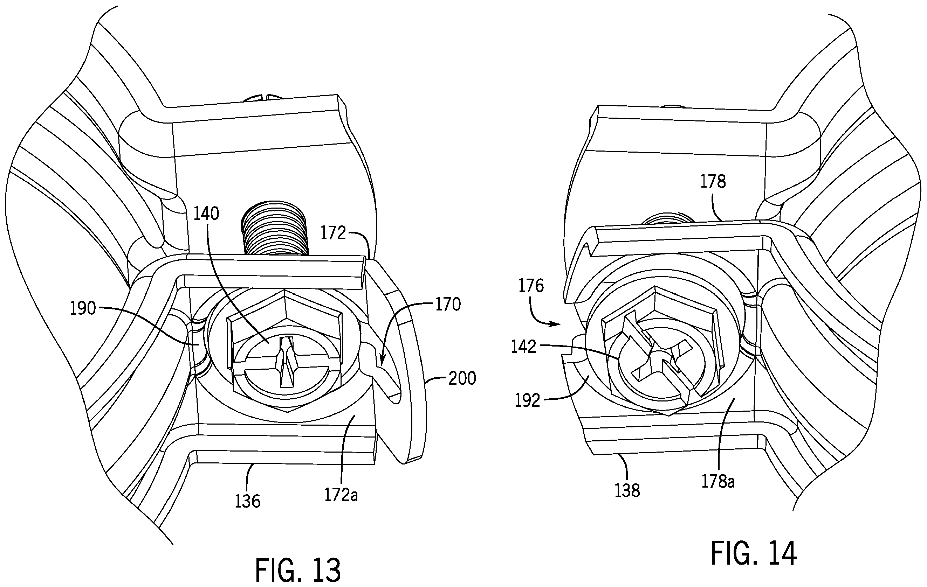

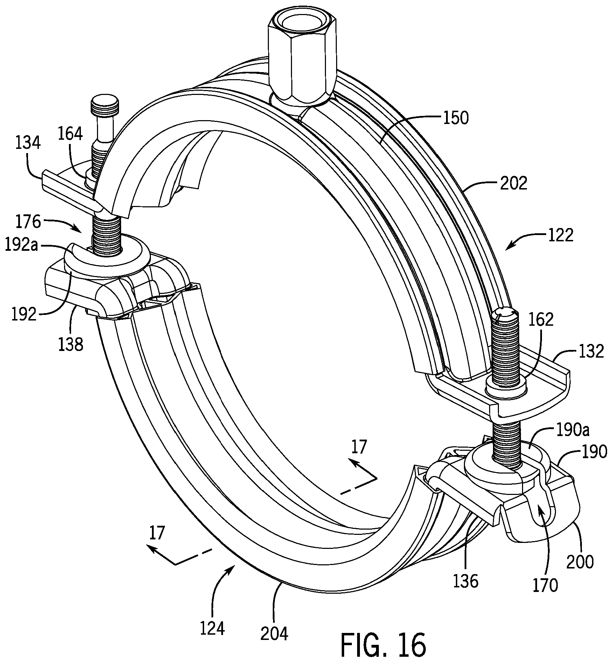

Also similarly to the pipe clamp 20, the pipe clamp 120 can include ribs and flanges to provide increased structural strength or other benefits. For example, as illustrated in FIG. 8 in particular, the first clamping member 124 includes a central rib 156 and a set of peripheral flanges 158, 160. The central rib 156 extends along the entire profile of the clamping portion 130 and corresponds to a central groove (not shown in FIG. 13) that is opposite the clamping portion 130 inside of the pipe clamp 120 (i.e., on the inner side of the first clamping member 124) In the embodiment illustrated, the central rib 156 does not extend onto the ears 132, 134, 136, 138, although other configurations are possible. In contrast, the peripheral flanges 158, 160 extend along the entire profile of the clamping portion 130 as well as over substantially the full radially-extending length of the ears 136, 138. A similar central rib 150 and similar peripheral flanges 152, 154 are also included on the second clamping member 122, as partially illustrated in FIGS. 6 and 16.

Generally, the central ribs 150, 156 and the peripheral flanges 152, 154, 158, 160 can provide increased strength to the clamping members 122, 124. The peripheral flanges 152, 154, 158, 160 in particular can provide significant strength to the ears 132, 134, 136, 138, as well as to the clamping portions 128, 130, so that the deflection of the ears 132, 134, 136, 138 is relatively minimal when the pipe clamp 120 is loaded. This can be useful, for example, not only to generally increase the strength of the pipe clamp 120 but also to minimize bending stresses on the fasteners 140, 142. For example, when the clamping members 122, 124 are firmly secured around a pipe (not shown), the relative lack of deflection of the ears 132, 134, 136, 138 can help to ensure that the fasteners 140, 142 are substantially subjected only to tension loading.

In different embodiments, the ribs 150, 156 and the flanges 152, 154, 158, 160 can exhibit different absolute and relative dimensions. In some embodiments, for example, the depth of the flanges 152, 154, 158, 160 (i.e., as measured vertically from the perspective of FIG. 6) can be two times or more than the thickness of the material (e.g., metal) used to form the clamping members 122, 124. In some embodiments, for example, the depth of the ribs 150, 156 can be less than the depth of the flanges 152, 154, 158, 160. In some embodiments, for example, the width of the ribs 150, 156 (i.e., as measured into the page from the perspective of FIG. 6) can be more than half of the width of the clamping members 122, 124. In some embodiments, for example, the width of the ribs 150, 156 can be more than seven times the thickness of the material used to form the clamping members 122, 124.

Similarly to the clamping member 22, each of the ears 132, 134 of the clamping member 122 includes an extruded, threaded boss 162, 164 (see FIG. 16), each defining a mounting opening for a respective one of the fasteners 140, 142. As partially illustrated in FIG. 6, a thinner toggle portion of the shaft of the fastener 142 can be aligned with the boss on the ear 134 to allow the fastener 142 to be pivoted relative to the ear 134.

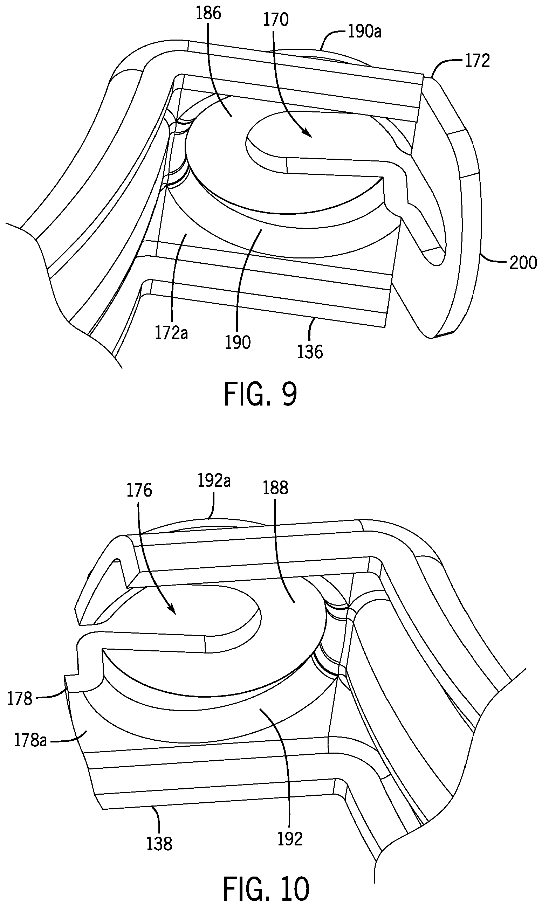

In some embodiments, as illustrated in FIGS. 8-10 in particular, the ears 136, 138 of the first clamping member 124 can include elongate slots that can allow a degree of lateral and pivotal relative movement between the clamping member 124 and the fasteners 140, 142. As illustrated in FIGS. 8 and 9, for example, a closed slot 170 is provided on a mounting portion 172 of the ear 136, with the slot 170 extending generally perpendicularly relative to a pipe axis 174 defined by the pipe clamp 120 (see, e.g., FIG. 6) and, along the main portion of the ear 136, radially outwardly from the clamping portion 130. The closed slot 170 can be configured to receive the fastener 140, and to thereby continue to secure the clamping portion 130 to the clamping portion 128 even when the pipe clamp 120 is in an open configuration.

In some embodiments, an open slot can be provided. As illustrated in FIG. 8, for example, and similarly to the open slot 76 discussed above, an open slot 176 is provided on a mounting portion 178 of the ear 138, with the slot 176 also extending generally perpendicularly to the pipe axis 174 (see FIG. 6). This may be useful, for example, in order to allow the fastener 142 to be pivoted into or out of the slot and, thereby, into or out of engagement with the clamping member 124, without removing the fastener 142 from the clamping member 122.

In some embodiments, additional features can be provided to strengthen the ears of a pipe clamp or provide other benefits. As illustrated in FIGS. 8-12, for example, each of the ears 136, 138 includes a respective recessed seat 190, 192 that defines a deviation from a substantially planar surface 172a, 178a of mounting portions 172, 178 of the ears 136, 138. In the illustrated embodiment, the recessed seats 190, 192 are substantially circular, although other configurations are possible.

Also in the embodiment illustrated, the slots 170, 176 extend substantially into the recessed seats 190, 192. As such, as illustrated in FIGS. 13 and 14 in particular, when the fasteners 140, 142 are tightened to secure the clamping members 122, 124 around a pipe (not shown), heads of the fasteners 140, 142 can seat against seating surfaces 186, 188 at the interior of seating portions 190a, 192a of the recessed seats 190, 192 (see, e.g., FIGS. 9 and 10 for the seating surfaces 186, 188), with shafts of the fasteners 140, 142 extending through the slots 170, 176. This can be useful, for example, to further increase the strength of the ears 136, 138 as well as to help to prevent the fasteners 140, 142 from becoming dislodged from the ears 136, 138, such as when the pipe clamp 120 is subjected to particularly large, potentially deforming loads. Moreover, the arrangement of the slots 170, 176, as similarly discussed relative to the slots 70, 76, can allow for ready pivoting of the pipe clamp 120 between open and closed configurations, without disassembly of the fasteners 140, 142 or the pipe clamp 120 generally.

A recessed seat, such as the recessed seats 190, 192, can be formed in different ways and with different absolute and relative geometries. In the embodiment illustrated, for example, the recessed seats 190, 192 are formed as extrusions into the substantially planar surfaces 172a, 178a of the mounting portions 172, 178 of the ears 136, 138, with substantially planar seating surfaces 186, 188. In other embodiments, other configurations are possible.

In some embodiments, seating surfaces within a seating recess (or seating recesses in general) can be angularly offset from parts of the ears on which they are formed. For example, as illustrated in FIGS. 9-12 in particular, the seating portions 190a, 192a and the seating surfaces 186, 188 of the recessed seats 190, 192 do not extend in parallel with the substantially planar surfaces 172a, 178a of the mounting portions 172, 178 of the ears 136, 138. Rather, the seating portions 190a, 192a and the seating surfaces 186, 188 extend at a relatively small angle as measured relative to the substantially planar surfaces 172a, 178a. This may be useful, for example, in order to further help to retain the heads of the fasteners 140, 142 within the recessed seats 190, 192. For example, due to the noted angular deviation, the recessed seats 190, 192 are somewhat deeper towards the radially exterior ends of the ears 136, 138 (i.e., farther from the pipe) than towards the radially interior ends of the ears 136, 138 (i.e., closer to the pipe). Accordingly, near the radially exterior ends of the ears 136, 138, each of the recessed seats 190, 192 provides a relatively large internal lip. These internal lips can provide a structural impediment to help prevent the heads of the fasteners 140, 142 from slipping out of the recessed seats 190, 192, even if loading of the pipe clamp 20 causes an adverse deflection of the ears 136, 138.

Additionally, as also discussed above, some configurations of the disclosed pipe clamp can be arranged so that the opposing sets of ears of the clamping members are tangentially spaced from each other when a pipe is appropriately secured. With this configuration, for example, as illustrated in FIG. 6 as well as FIGS. 13 and 14, the non-parallel configuration of the mounting portions of the ears relative to the seating portions of recessed seats can help to ensure appropriate engagement of the ears by the relevant fasteners. For example, the angular offset of the seating portions relative to the mounting portions 172, 178 can ensure that heads of nuts and the associated bolts are appropriately aligned for optimal loading. Further, this arrangement can allow a tightening of the relevant fasteners to cause the associated ears to deflect slightly towards each other. This can provide increasingly strong tactile feedback to consumers to indicate appropriate installation, and can also, via a levering action, help to provide a tighter engagement of the pipe by the clamping portions as compared to conventional designs. This can also apply, for example, when a liner is used (e.g., as discussed below).

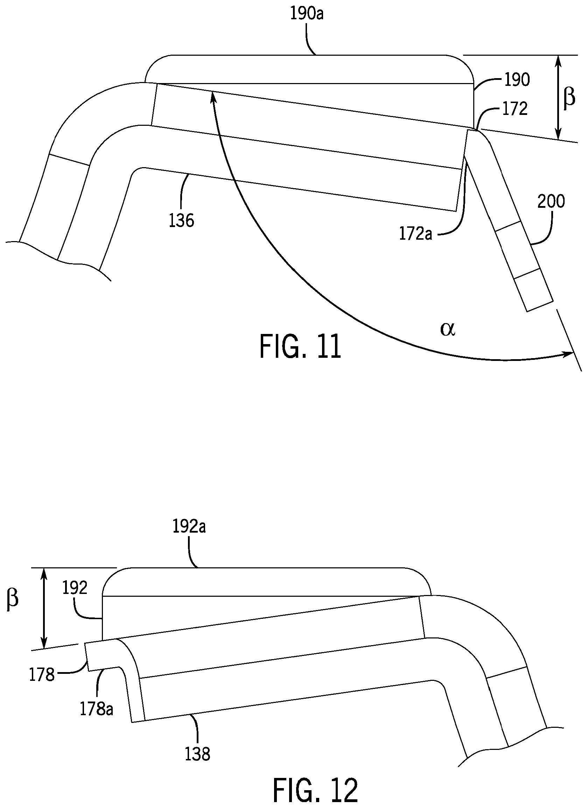

In different embodiments, different angular deviations for recessed seats can be provided. In the embodiment illustrated, for example, as shown in FIGS. 11 and 12 in particular, the seating portions 190a, 192a and the seating surfaces 186, 188 of the recessed seats 190, 192 extend at an angle □ of approximately 8 degrees relative to the substantially planar surfaces 172a, 178a of the mounting portions 172, 178 of the ears 134, 136. In other embodiments, other configurations are possible, including a range of angles less than or equal to approximately 10 degrees. In some embodiments, different angles can be provided for the seating portion 190a as compared to the seating surface 186 than for the seating portion 192a as compared to the seating surface 188. In some embodiments, different angles can be provided for the seating surface 186 as compared to the seating surface 188 or for the seating portion 190a as compared to the seating portion 192a.

As another example, as shown in FIG. 6 in particular, the seating portions 190a, 192a extend substantially horizontally (in the illustrated reference frame), or otherwise substantially in parallel with the ears 132, 134, when the clamping members 124 are in an un-deformed state. Correspondingly, the substantially planar surfaces 172a, 178a of the mounting portions 172, 178 of the ears 134, 136 extend at angles of approximately 8 degrees below horizontal (in the illustrated reference frame) when the clamping member 124 is in the illustrated installed orientation. In other embodiments, other configurations are possible. Of particular note, as also alluded to above, with the seating portions 190a, 192a substantially in parallel with the ears 132, 134, appropriate loading of the fasteners 140, 142 can be readily obtained.

In some embodiments, a recessed seat can be formed so that a fastener can rotate relatively freely when secured therein. For example, as illustrated in FIGS. 13 and 14 in particular, the recessed seats 190, 192 are formed as generally circular recesses with characteristic diameters that are sufficiently large so that the heads of the fasteners 140, 142 can rotate freely therein. This may be useful, for example, so that a user can secure a clamp around a pipe by rotating a fastener from either side of the clamp (e.g., at the head of a bolt, at a nut for the bolt, or both). Further, this arrangement can allow for relatively easy use of a variety of different fasteners with the same pipe clamp, as well as a reversed configuration, with a nuts rather than bolt heads seated within the recessed seats 190, 192.

In some embodiments, additional features can be provided in order to further assist with installation of pipe into the pipe clamp 120. As also illustrated in FIG. 11, for example, an installation tab 200 extends from the mounting portion 172 of the ear 138 at an angle □□ Although a variety of angles are possible, the illustrate embodiment beneficially exhibits an angle of between approximately 115 degrees and approximately 125 degrees (e.g., at an angle of approximately 120 degrees), as measured from the substantially planar surface 136a.

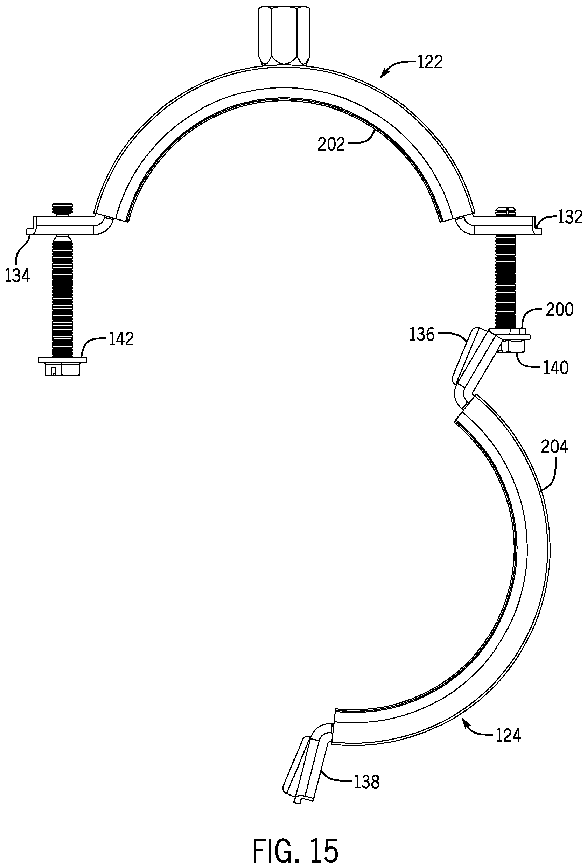

In addition to the noted features, the closed slot 170 also extends from the mounting portion 172 of the ear 138 onto the installation tab 200. Accordingly, as similarly discussed relative to the slot 70, the pipe clamp 120 can be opened to a relatively large angle without full disassembly (e.g., with the fastener 140 still secured to the two ears 136, 132. For example, as illustrated in FIG. 15 in particular, the shaft of the fastener 140 can be disposed in the portion of the slot 170 that is on the installation tab 200 when the pipe clamp 120 is fully opened. And the installation tab 200 can thereby support the clamping member 124 at an open angle of between approximately 55 degrees and approximately 65 degrees (e.g., approximately 60 degrees, as measured in comparison between a first reference plane extending along the ears 132, 134 and a second reference plane extending along the ears 136, 138). This relatively large open angle can be useful, for example, so that relatively large pipes can be relatively easily installed without requiring full disassembly of the pipe clamp 120 (i.e., while allowing the clamping members 122, 124 and the fasteners 140, 142 to remain connected as a single assembly). In some cases, this arrangement can usefully allow the pipe clamp 20 to be readily installed onto pipes that have already been suspended in a desired location, or otherwise usefully deployed.

In other embodiments, other configurations are possible. For example, in some embodiments, an installation tab similar to the installation tab 200 can be provided in the absence of recessed seats such as the recessed seats 190 192. Similarly, in some embodiments, recessed seats such as the recessed seats 190, 192 can be provided in the absence of an installation tab. In some embodiments in which an installation tab is provided along with recessed seats, an angle of approximately 120 degrees for the installation tab, relative to a reference plane of a relevant mounting portion of a clamping member, may be particularly beneficial. For example, an angle of approximately 120 degrees of deviation may provide appropriate clearance for installation of the head of a fastener into the proximate recessed seat, while also providing relatively minimal additional length for the relevant ear, in order to allow for relatively close spacing between adjacently installed pipes.

As with other embodiments, in some configurations, liners can be used with the pipe clamp 120. In the configuration illustrated in FIGS. 15 and 16, for example, liner parts 202, 204 of a generally non-metallic liner have been installed on the clamping portions 128, 130 of the clamping members 122, 124, respectively. The liner parts 202, 204 can be formed primarily from rubber, other elastomers, or other polymers, and can help to secure pipes in the pipe clamp 120 or to provide acoustic dampening. In some embodiments, the liner parts 202, 204 can also increase the load rating of the pipe clamp 120 as compared to arrangements in which conventional liner parts are used. Of course, in some arrangements, such as shown in FIG. 6, liner parts may not be used with the pipe clamp 120.

In some embodiments, liner parts for a pipe clamp, including liner parts as discussed above, can be formed with relatively thin non-metallic walls that enclose one or more hollow internal compartments. This may be useful, for example, in order to help to improve overall load ratings of a pipe, such as may be determined under RAL standards or other standardized testing, as well as to improve acoustic dampening.

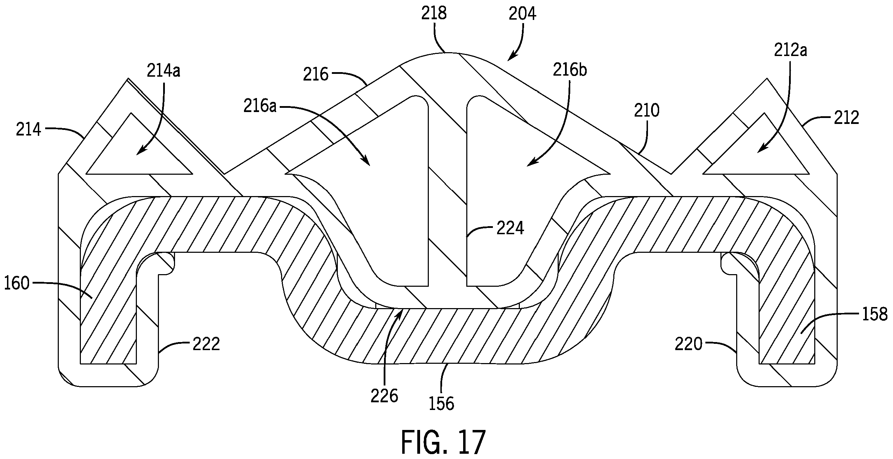

As illustrated in FIG. 17, for example, the liner part 204, which may be substantially geometrically similar to the liner parts 102, 104, 202, exhibits relatively thin external walls 210 that define two hollow peripheral ridges 212, 214, an expanded central region 216 with a central peak 218, and a set of return lips 220, 222. The external walls 210 accordingly also define two hollow internal compartments 212a, 214a within the ridges 212, 214 and, in combination with an internal wall 224, a set of hollow internal compartments 216a, 216b within the central region 216.

As illustrated in FIG. 17 in particular, the return lips 220, 222 are configured to engage peripheral flanges on a clamping member, such as the peripheral flanges 158, 160 on the clamping member 124 (see also FIG. 6). This can, for example, help to secure the liner part 204 on the clamping member 124 during transport as well as during installation of a pipe.

Also as illustrated in FIG. 17 in particular, the central region 216, including portions of the hollow internal compartments 216a, 216b, can extend into a groove on a clamping member, such as a central groove 226 defined by the central rib 150 of the clamping member 124. This can, for example, also help to secure the liner part 204 on the clamping member 124 as well as help to provide other benefits discussed below.

In some cases, internal compartments, such as the various internal compartments 216a, 216b, can contribute to substantial acoustic dampening. Further, a relatively thin configuration of external walls, such as the external walls 210, can contribute to improved load ratings for a pipe clamp, as compared to arrangements in which conventional liners are used. For example, the relatively thin external walls 210, as potentially modulated by the hollow internal compartments 212a, 214a, 216a, 216b, can deform relatively significantly upon initial application of pre-loading to the liner part 204, but then resist significant deformation upon application of further loads. Further, in some structural tests, such as tests under the RAL Standards, a reference deflection for determining a load rating is measured after application of a pre-load. Accordingly, the noted initial susceptibility and subsequent resistance to deformation, as exhibited by liners according to embodiments of the invention, can result in relatively significant improvements in actual load ratings. Further, hollow internal compartments, such as the hollow internal compartments 212a, 214a, 216a, 216b, as defined by the external walls 210 and the internal wall 224, can provide relatively significant acoustic dampening, which may potentially counter any loss of dampening resulting from the relatively thin aspect of the external walls 210.

In different embodiments, liner parts can exhibit different configurations. In the illustrated embodiment, for example, the central region 216 of the liner part 204 exhibits a generally diamond-shaped profile, with the two internal compartments 216a, 216b, lateral vertices of the diamond that are configured to extend wider than the central groove 226 on the clamping member 124, and a somewhat flattened vertex that is configured to seat within the central groove 226. Likewise, the peripheral ridges 212, 214 exhibit substantially triangular profiles and are disposed at the lateral edges of the liner part 204 (from the perspective of FIG. 17) in substantial alignment with the return lips 220, 222. Further, in the embodiment illustrated, the external walls 210 and the internal wall 224 can exhibit thicknesses of between approximately 0.7 mm and approximately 1 mm. In other embodiments, however, other configurations are possible.

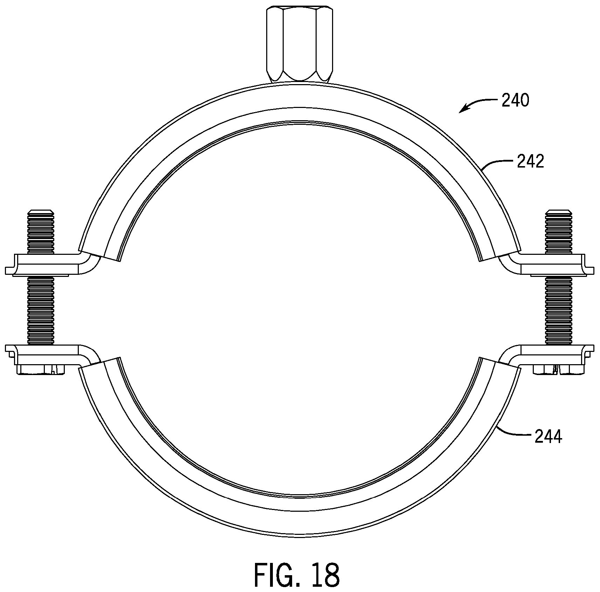

In some embodiments, liner parts similar to the liner part 204, or otherwise configured, can be used with differently configured pipe clamps. For example, a pipe clamp 240 illustrated in FIG. 18 can be used with liner parts 242, 244 that are substantially geometrically similar to the liner part 204 (see, e.g., FIG. 17). In some ways, the pipe clamp 240 can be similar to the pipe clamps 20, 120. For example, the pipe clamp 240 can exhibit closed or open slots (not shown), peripheral flanges, central ribs (not shown), threaded bosses (not shown) and other features similar to the pipe clamps 20, 120. In other ways, the pipe clamp 240 can vary from the pipe clamps 20, 20. For example, in the embodiment illustrated, the pipe clamp 240 does not include an installation tab similar to the installation tabs 100, 200 (see, e.g., FIGS. 1 and 6).

Thus, embodiments of the inventions provide an improved clamp for supporting pipes relative to other structures. In some embodiments, for example, an installation tab can facilitate a relatively large opening angle for a pipe clamp without requiring the pipe clamp to be fully disassembled. As another example, in some embodiments, recessed seats on ears of a clamping member can provide improved structural strength for a pipe clamp, as well as helping to retain relevant fasteners in place after installation. As still another example, in some embodiments, non-metallic liner parts with relatively thin walls and internal hollow compartments can help to increase load ratings for a pipe clamp, as well as to provide relatively significant acoustic dampening.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the scope of the invention as defined in the appended claims.

## Claims

1. A clamp (120) for securing a pipe using first and second fasteners (142, 140), the clamp comprising:
a first clamping member (124) and a second clamping member (122);
each clamping member (124, 122) including a respective clamping portion (130, 128) configured to engage the pipe, and a respective set of ears (138, 136, 134, 132);
the ears (138, 136, 134, 132) of each of the clamping members (124, 122) extending from opposite sides of the respective clamping portion (130, 128), with a first ear (138, 134) being configured to receive the first fastener (142) and a second ear (136, 132) being configured to receive the second fastener (140), to secure the first and second clamping members (124, 122) together;
each of the first and the second ears (138, 136) of the first clamping member (124) including a recessed seat (192, 190) to receive a head of the first or the second fastener (142, 140), respectively;
the first ear (138) of the first clamping member (124) includes a mounting portion (178) that includes the recessed seat (192), the mounting portion (178) defining a substantially planar surface (178a) and the recessed seat (192) defining a deviation from the substantially planar surface (178a) that is configured to extend away from the substantially planar surface (178a) towards the second clamping member (122) when the first and second clamping members (124, 122) are secured around the pipe;
wherein a seat portion (192a) of the recessed seat (192) has a planar seating surface (188) and wherein the seat portion (192a) is configured to form a seat for the head of the first fastener (142) when the first fastener (142) secures the first and second clamping members (124, 122) around the pipe; and
wherein the seating surface (188) of the recessed seat (192) is not parallel to the substantially planar surface (178a) defined by the mounting portion (178).

2. The clamp (120) of Claim 1, wherein the first ear (138) of the first clamping member (124) includes an elongate slot (176) configured to receive a shaft of the first fastener (142), the elongate slot (176) extending into the recessed seat (192) to receive the first fastener (142) within the recessed seat (192).

3. The clamp (120) of Claim 2, with the first fastener (142) configured as a toggle screw, wherein the elongate slot (176) is an open slot; and
wherein the second clamping member (122) includes a mounting hole (164) for the toggle screw, the mounting hole (164) being configured to permit the toggle screw (142) to remain secured to the second clamping member (122) as the toggle screw (142) pivots into the open slot (176) during installation of the pipe into the clamp (120).

4. The clamp (120) of either of Claims 2 or 3, wherein the clamp (120) is configured to secure the pipe with the pipe extending along a pipe axis (174); and
wherein the elongate slot (176) is elongate in a direction perpendicular to the pipe axis (174) and is open at an end opposite the clamping portion (130) of the first clamping member (124).

5. The clamp (120) of any of the preceding claims, wherein the second ear (136) of the first clamping member (124) includes a closed elongate slot (170) that is configured to retain the second fastener (140) during installation of the pipe into the clamp (120).

6. The clamp (120) of any of the preceding claims, wherein the second ear (132) of the second clamping member (122) includes a mounting hole (162) configured to retain the second fastener (140) during installation of the pipe into the clamp (120), so that the first and second clamping members (124, 122) remain secured together by the first fastener (142, 140) during the installation of the pipe into the clamp (120).

7. The clamp (120) of any of the preceding claims, wherein a first ear (134) of the second clamping member (122) includes a mounting hole (164) that is configured to permit a toggle screw (142) to remain secured to the second clamping member (122) as the toggle screw (142) pivots into the elongate slot (176) of first ear (138) of the first clamping member (124), during installation of the pipe into the clamp (120).

8. The clamp (120) of any of the preceding claims, wherein the substantially planar surface (178a) is configured to angle away from the first ear (134) of the second clamp member (122) when the pipe is clamped between the first and second clamp members (124, 122); and
wherein the recessed seat (192) is configured to extend in parallel with the first ear (134) of the second clamp member (122) when the pipe is clamped between the first and second clamp members (124, 122).

9. The clamp (120) of any of the preceding claims, wherein the second ear (136) of the first clamping member (124) further includes:
an installation tab (200) extending at an angle from the mounting portion (172) opposite the clamping portion (130); and
an elongate slot (170) extending from the recessed seat (190) onto the installation tab (200);
wherein, with the clamp (120) suspended via the second clamping member (122) and the second fastener (140) secured to the second ears (136, 132) of the first and second clamping members (124, 122), the installation tab (200) is configured to support the first clamping member (124) relative to the second clamping member (122), via the second fastener (140) extending through the elongate slot (170).

10. The clamp (120) of Claim 9, wherein the installation tab (200) extends at an angle of between approximately 110 and approximately 130 degrees, inclusive, relative to the mounting portion (172).

11. The clamp (120) of any of the preceding claims, wherein at least one of the recessed seats (192, 190) is configured so that the head of the first or the second fastener (142, 140) is rotatable within the at least one of the recessed seats (192, 190).

12. The clamp (120) of any of the preceding claims, wherein the first and second clamping members (124, 122) are configured to clamp the pipe, with substantially continuous contact with the pipe along the first and second clamping portions (130, 128), with the first ears (138, 134) of the first and second clamping portions (130, 128) spaced apart from each other and with the second ears (136, 132) of the first and second clamping portions (130, 128) spaced apart from each other.

13. The clamp (120) of any of the preceding claims, wherein at least one of the first or the second clamping member (124, 122) includes a central rib (156, 150) and peripheral flanges (158, 160, 152, 154) extending along the respective clamping portion (130, 128), and
optionally or preferably, wherein the peripheral flanges (158, 160, 152, 154) extend onto the first and second ears (138, 136, 134, 132) of the at least one of the first or the second clamping member (130, 128).

14. The clamp (120) of Claim 13, further comprising:
at least one non-metallic liner (204) that includes return lips (220, 222) configured to engage the peripheral flanges (158, 160) to secure the non-metallic liner (204) to the at least one of the first clamping member (124) or the second clamping member (122), and optionally or preferably:
wherein the central rib (156) extends radially to the outside of the clamp (120) and corresponds to a central groove (226) inside of the clamp (120);
wherein the non-metallic liner (204) includes at least one hollow internal compartment (216a) with at least one internal rib (224); and
wherein the at least one hollow internal compartment (216a) extends into the central groove (226).

15. The clamp of any of the preceding claims, wherein the recessed seat (192) is formed as an extrusion into the mounting portion (178).

## Patentansprüche

1. Schelle (120) zum Befestigen eines Rohrs unter Verwendung eines ersten und eines zweiten Befestigungselements (142, 140), wobei die Schelle Folgendes umfasst:
ein erstes Klemmglied (124) und ein zweites Klemmglied (122),
wobei jedes Klemmglied (124, 122) einen jeweiligen Klemmabschnitt (130, 128), der zur Ineingriffnahme des Rohrs ausgestaltet ist, und einen jeweiligen Satz Ohren (138, 136, 134, 132) aufweist,
wobei sich die Ohren (138, 136, 134, 132) jedes der Klemmglieder (124, 122) von gegenüberliegenden Seiten des jeweiligen Klemmabschnitts (130, 128) erstrecken, wobei ein erstes Ohr (138, 134) zur Aufnahme des ersten Befestigungselements (142) ausgestaltet ist und ein zweites Ohr (136, 132) zur Aufnahme des zweiten Befestigungselements (140) ausgestaltet ist, um das erste und das zweite Befestigungselement (124, 122) aneinander zu befestigen,
wobei das erste und das zweite Ohr (138, 136) des ersten Klemmglieds (124) jeweils einen ausgesparten Sitz (192, 190) zur Aufnahme eines Kopfs des ersten bzw. zweiten Befestigungselements (142, 140) aufweist,
wobei das erste Ohr (138) des ersten Klemmglieds (124) einen Montageabschnitt (178) aufweist, der den ausgesparten Sitz (192) aufweist, wobei der Montageabschnitt (178) eine im Wesentlichen planare Fläche (178a) definiert und der ausgesparte Sitz (192) eine Abweichung von der im Wesentlichen planaren Fläche (178a) definiert, die dazu ausgestaltet ist, sich von der im Wesentlichen planaren Fläche (178a) weg zu dem zweiten Klemmglied (122) hin zu erstrecken, wenn das erste und das zweite Befestigungselement (124, 122) um das Rohr herum befestigt sind,
wobei ein Sitzabschnitt (192a) des ausgesparten Sitzes (192) eine planare Sitzfläche (188) hat und wobei der Sitzabschnitt (192a) dazu ausgestaltet ist, einen Sitz für den Kopf des ersten Befestigungselements (142) zu bilden, wenn das erste Befestigungselement (142) das erste und das zweite Befestigungselement (124, 122) um das Rohr herum befestigt, und
wobei die Sitzfläche (188) des ausgesparten Sitzes (192) nicht parallel zu der durch den Montageabschnitt (178) definierten, im Wesentlichen planaren Fläche (178a) verläuft.

2. Schelle (120) nach Anspruch 1, wobei das erste Ohr (138) des ersten Klemmglieds (124) einen Längsschlitz (176) aufweist, der zur Aufnahme eines Schafts des ersten Befestigungselements (142) ausgestaltet ist, wobei sich der Längsschlitz (176) in den ausgesparten Sitz (192) erstreckt, um das erste Befestigungselement (142) in dem ausgesparten Sitz (192) aufzunehmen.

3. Schelle (120) nach Anspruch 2, wobei das erste Befestigungselement (142) als eine Knebelschraube ausgestaltet ist, wobei der Längsschlitz (176) ein offener Schlitz ist und
wobei das zweite Klemmglied (122) ein Montageloch (164) für die Knebelschraube aufweist, wobei das Montageloch (164) so ausgestaltet ist, dass die Knebelschraube (142) an dem zweiten Klemmglied (122) befestigt bleiben kann, wenn die Knebelschraube (142) während der Installierung des Rohrs in der Schelle (120) in den offenen Schlitz (176) schwenkt.

4. Schelle (120) nach Anspruch 2 oder 3, wobei die Schelle (120) dazu ausgestaltet ist, das Rohr so zu befestigen, dass sich das Rohr entlang einer Rohrachse (174) erstreckt, und
wobei der Längsschlitz (176) in eine senkrecht zu der Rohrachse (174) verlaufende Richtung längserstreckt ist und an einem dem Klemmabschnitt (130) des ersten Klemmglieds (124) gegenüberliegenden Ende offen ist.

5. Schelle (120) nach einem der vorhergehenden Ansprüche, wobei das zweite Ohr (136) des ersten Klemmglieds (124) einen geschlossenen Längsschlitz (170) aufweist, der zum Halten des zweiten Befestigungselements (140) während der Installierung des Rohrs in der Schelle (120) ausgestaltet ist.

6. Schelle (120) nach einem der vorhergehenden Ansprüche, wobei das zweite Ohr (132) des zweiten Klemmglieds (122) ein Montageloch (162) aufweist, das zum Halten des zweiten Befestigungselements (140) während der Installierung des Rohrs in der Schelle (120) ausgestaltet ist, so dass das erste und das zweite Klemmglied (124, 122) während der Installierung des Rohrs in der Schelle (120) mittels des ersten Befestigungselements (142, 140) aneinander befestigt bleiben.

7. Schelle (120) nach einem der vorhergehenden Ansprüche, wobei das erste Ohr (134) des zweiten Klemmglieds (122) ein Montageloch (164) aufweist, das so ausgestaltet ist, dass eine Knebelschraube (142) an dem zweiten Klemmglied (122) befestigt bleiben kann, wenn die Knebelschraube (142) während der Installierung des Rohrs in der Schelle (120) in den Längsschlitz (176) des ersten Ohrs (138) des ersten Klemmglieds (124) schwenkt.

8. Schelle (120) nach einem der vorhergehenden Ansprüche, wobei die im Wesentlichen planare Fläche (178a) dazu ausgestaltet ist, sich winkelförmig von dem ersten Ohr (134) des zweiten Klemmglieds (122) weg zu erstrecken, wenn das Rohr zwischen dem ersten und dem zweiten Klemmglied (124, 122) geklemmt ist, und
wobei der ausgesparte Sitz (192) dazu ausgestaltet ist, sich parallel zu dem ersten Ohr (134) des zweiten Klemmglieds (122) zu erstrecken, wenn das Rohr zwischen dem ersten und dem zweiten Klemmglied (124, 122) geklemmt ist.

9. Schelle (120) nach einem der vorhergehenden Ansprüche, wobei das zweite Ohr (136) des ersten Klemmglieds (124) ferner Folgendes aufweist:
eine Installierungslasche (200), die sich in einem Winkel von dem Montageabschnitt (172) gegenüber dem Klemmabschnitt (130) erstreckt, und
einen Längsschlitz (170), der sich von dem ausgesparten Sitz (190) auf die Installierungslasche (200) erstreckt,
wobei, wenn die Schelle (120) über das zweite Klemmglied (122) aufgehängt ist und das zweite Befestigungselement (140) an den zweiten Ohren (136, 132) des ersten und des zweiten Klemmglieds (124, 122) befestigt ist, die Installierungslasche (200) dazu ausgestaltet ist, das erste Klemmglied (124) über das zweite Befestigungselement (140), das sich durch den Längsschlitz (170) erstreckt, bezüglich des zweiten Klemmglieds (122) zu stützen.

10. Schelle (120) nach Anspruch 9, wobei sich die Installierungslasche (200) in einem Winkel von ungefähr 110 bis einschließlich ungefähr 130 Grad bezüglich des Montageabschnitts (172) erstreckt.

11. Schelle (120) nach einem der vorhergehenden Ansprüche, wobei mindestens einer der ausgesparten Sitze (192, 190) so ausgestaltet ist, dass der Kopf des ersten oder des zweiten Befestigungselements (142, 140) in dem mindestens einen der ausgesparten Sitze (192, 190) drehbar ist.

12. Schelle (120) nach einem der vorhergehenden Ansprüche, wobei das erste und das zweite Klemmglied (124, 122) dazu ausgestaltet sind, das Rohr mit im Wesentlichen durchgehenden Kontakt mit dem Rohr entlang dem ersten und dem zweiten Klemmabschnitt (130, 128) zu klemmen, wobei die ersten Ohren (138, 134) des ersten und des zweiten Klemmabschnitts (130, 128) voneinander beabstandet sind und die zweiten Ohren (136, 132) des ersten und des zweiten Klemmabschnitts (130, 128) voneinander beabstandet sind.

13. Schelle (120) nach einem der vorhergehenden Ansprüche, wobei das erste und/oder das zweite Klemmglied (124, 122) eine mittlere Rippe (156, 150) und Umfangsflansche (158, 160, 152, 154), die sich entlang des jeweiligen Klemmabschnitts (130, 128) erstrecken, aufweisen und
optional oder vorzugsweise wobei sich die Umfangsflansche (158, 160, 152, 154) auf die ersten und die zweiten Ohren (138, 136, 134, 132) des ersten und/oder zweiten Klemmglieds (130, 128) erstrecken.

14. Schelle (120) nach Anspruch 13, ferner umfassend:
mindestens eine nicht metallische Auskleidung (204), die Rücklippen (220, 222) aufweist, die dazu ausgestaltet sind, die Umfangsflansche (158, 160) in Eingriff zu nehmen, um die nicht metallische Auskleidung (204) an dem ersten Klemmglied (124) und/oder dem zweiten Klemmglied (122) zu befestigen, und optional oder vorzugsweise:
wobei sich die mittlere Rippe (156) radial zu der Außenseite der Schelle (120) erstreckt und einer mittleren Nut (226) in der Schelle (120) entspricht,
wobei die nicht metallische Auskleidung (204) mindestens ein hohles inneres Fach (216a) mit mindestens einer inneren Rippe (224) aufweist und
wobei sich das mindestens eine hohle innere Fach (216a) in die mittlere Nut (226) erstreckt.

15. Schelle nach einem der vorhergehenden Ansprüche, wobei der ausgesparte Sitz (192) als eine Extrusion in den Montageabschnitt (178) ausgebildet ist.

## Revendications

1. Collier (120) destiné à fixer un tuyau au moyen de premier et second dispositifs de fixation (142, 140), le collier comprenant :
un premier élément de serrage (124) et un second élément de serrage (122) ;
chaque élément de serrage (124, 122) comprenant une partie de serrage respective (130, 128) conçue pour venir en prise avec le tuyau, et un ensemble de pattes respectif (138, 136, 134, 132) ;
les pattes (138, 136, 134, 132) de chacun des éléments de serrage (124, 122) s'étendant depuis des côtés opposés de la partie de serrage respective (130, 128), une première patte (138, 134) étant conçue pour recevoir le premier dispositif de fixation (142) et une seconde patte (136, 132) étant conçue pour recevoir le second dispositif de fixation (140), pour fixer les premier et second éléments de serrage (124, 122) ensemble ;
chacune des première et seconde pattes (138, 136) du premier élément de serrage (124) comprenant une assise évidée (192, 190) pour recevoir une tête du premier ou du second dispositif de fixation (142, 140), respectivement ;
la première patte (138) du premier élément de serrage (124) comprend une partie de montage (178) qui comprend l'assise évidée (192), la partie de montage (178) définissant une surface sensiblement plane (178a) et l'assise évidée (192) définissant un écart par rapport à la surface sensiblement plane (178a) qui est conçu pour s'étendre à distance de la surface sensiblement plane (178a) en direction du second élément de serrage (122) lorsque les premier et second éléments de serrage (124, 122) sont fixés autour du tuyau ;
dans lequel une partie d'assise (192a) de l'assise évidée (192) comporte une surface d'assise plane (188) et dans lequel la partie d'assise (192a) est conçue pour former une assise pour la tête du premier dispositif de fixation (142) lorsque le premier dispositif de fixation (142) fixe les premier et second éléments de serrage (124, 122) autour du tuyau ; et
dans lequel la surface d'assise (188) de l'assise évidée (192) n'est pas parallèle à la surface sensiblement plane (178a) définie par la partie de montage (178).

2. Collier (120) selon la revendication 1, dans lequel la première patte (138) du premier élément de serrage (124) comprend une fente allongée (176) conçue pour recevoir un arbre du premier dispositif de fixation (142), la fente allongée (176) s'étendant dans l'assise évidée (192) pour recevoir le premier dispositif de fixation (142) à l'intérieur de l'assise évidée (192).

3. Collier (120) selon la revendication 2, le premier dispositif de fixation (142) étant conçu sous forme de vis à ailettes, dans lequel la fente allongée (176) est une fente ouverte ; et
dans lequel le second élément de serrage (122) comprend un trou de montage (164) pour la vis à ailettes, le trou de montage (164) étant conçu pour permettre à la vis à ailettes (142) de rester fixée au second élément de serrage (122) à mesure que la vis à ailettes (142) pivote dans la fente allongée (176) pendant l'installation du tuyau dans le collier (120).

4. Collier (120) selon l'une des revendications 2 ou 3, dans lequel le collier (120) est conçu pour fixer le tuyau, le tuyau s'étendant le long d'un axe de tuyau (174) ; et
dans lequel la fente allongée (176) est allongée dans une direction perpendiculaire à l'axe du tuyau (174) et est ouverte à une extrémité opposée à la partie de serrage (130) du premier élément de serrage (124).

5. Collier (120) selon l'une quelconque des revendications précédentes, dans lequel la seconde patte (136) du premier élément de serrage (124) comprend une fente allongée fermée (170) qui est conçue pour retenir le second dispositif de fixation (140) pendant l'installation du tuyau dans le collier (120).

6. Collier (120) selon l'une quelconque des revendications précédentes, dans lequel la seconde patte (132) du second élément de serrage (122) comprend un trou de montage (162) conçu pour retenir le second dispositif de fixation (140) pendant l'installation du tuyau dans le collier (120), afin que les premier et second éléments de serrage (124, 122) restent fixés ensemble par le premier dispositif de fixation (142, 140) pendant l'installation du tuyau dans le collier (120).

7. Collier (120) selon l'une quelconque des revendications précédentes, dans lequel une première patte (134) du second élément de serrage (122) comprend un trou de montage (164) qui est conçu pour permettre à une vis à ailettes (142) de rester fixée au second élément de serrage (122) à mesure que la vis à ailettes (142) pivote dans la fente allongée (176) de la première patte (138) du premier élément de serrage (124), pendant l'installation du tuyau dans le collier (120).

8. Collier (120) selon l'une quelconque des revendications précédentes, dans lequel la surface sensiblement plane (178a) est conçue pour former un angle à distance de la première patte (134) du second élément de serrage (122) lorsque le tuyau est serré entre les premier et second éléments de serrage (124, 122) ; et
dans lequel l'assise évidée (192) est conçue pour s'étendre parallèlement à la première patte (134) du second élément de serrage (122) lorsque le tuyau est serré entre les premier et second éléments de serrage (124, 122) .

9. Collier (120) selon l'une quelconque des revendications précédentes, dans lequel la seconde patte (136) du premier élément de serrage (124) comprend en outre :
une languette d'installation (200) s'étendant à un angle par rapport à la partie de montage (172) à l'opposé de la partie de serrage (130) ; et
une fente allongée (170) s'étendant depuis l'assise évidée (190) sur la languette d'installation (200) ;
dans lequel, le collier (120) étant suspendu par le biais du second élément de serrage (122) et le second dispositif de fixation (140) étant fixé aux secondes pattes (136, 132) des premier et second éléments de serrage (124, 122), la languette d'installation (200) est conçue pour supporter le premier élément de serrage (124) par rapport au second élément de serrage (122), par le biais du second dispositif de fixation (140) s'étendant à travers la fente allongée (170).

10. Collier (120) selon la revendication 9, dans lequel la languette d'installation (200) s'étend à un angle compris entre environ 110 degrés et environ 130 degrés inclus, par rapport à la partie de montage (172).

11. Collier (120) selon l'une quelconque des revendications précédentes, dans lequel au moins l'une des assises évidées (192, 190) est conçue de façon que la tête du premier ou du second dispositif de fixation (142, 140) puisse tourner à l'intérieur d'au moins l'une des assises évidées (192, 190).

12. Collier (120) selon l'une quelconque des revendications précédentes, dans lequel les premier et second éléments de serrage (124, 122) sont conçus pour serrer le tuyau, avec un contact sensiblement continu avec le tuyau le long des première et seconde parties de serrage (130, 128), les premières pattes (138, 134) des première et seconde parties de serrage (130, 128) étant espacées l'une de l'autre et les secondes pattes (136, 132) des première et seconde parties de serrage (130, 128) étant espacées l'une de l'autre.

13. Collier (120) selon l'une quelconque des revendications précédentes, dans lequel au moins l'un du premier ou du second élément de serrage (124, 122) comprend une nervure centrale (156, 150) et des rebords périphériques (158, 160, 152, 154) s'étendant le long de la partie de serrage respective (130, 128), et
en option ou de préférence, dans lequel les rebords périphériques (158, 160, 152, 154) s'étendent sur les première et seconde pattes (138, 136, 134, 132) de l'au moins un du premier ou du second élément de serrage (130, 128) .

14. Collier (120) selon la revendication 13, comprenant en outre :
au moins un revêtement non métallique (204) qui comprend des bords de retour (220, 222) conçus pour venir en prise avec les rebords périphériques (158, 160) pour fixer le revêtement non métallique (204) sur l'au moins un du premier élément de serrage (124) ou du second élément de serrage (122), et en option ou de préférence :
dans lequel la nervure centrale (156) s'étend radialement vers l'extérieur du collier (120) et correspond à une rainure centrale (226) à l'intérieur du collier (120) ;
dans lequel le revêtement non métallique (204) comprend au moins un compartiment interne creux (216a) ayant au moins une nervure interne (224) ; et
dans lequel l'au moins un compartiment interne creux (216a) s'étend dans la rainure centrale (226).

15. Collier selon l'une quelconque des revendications précédentes, dans lequel l'assise évidée (192) est formée en tant qu'extrusion dans la partie de montage (178).
